(19)

Europäisches Patentamt
European Patent Office
Office européen des brevets

(11) **EP 2 623 965 A1**

(12) **EUROPEAN PATENT APPLICATION**

(43) Date of publication:
**07.08.2013 Bulletin 2013/32**

(51) Int Cl.:
*G01N 23/083* (2006.01)

(21) Application number: **12008477.7**

(22) Date of filing: **20.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.01.2012 JP 2012017452**

(71) Applicant: **X-Ray Precision, Inc.**
**Kyoto 601-8510 (JP)**

(72) Inventor: **Hosokawa, Yoshinori**
**Kyoto 610-0351 (JP)**

(74) Representative: **Hauck Patent- und Rechtsanwälte**
**Neuer Wall 50**
**20354 Hamburg (DE)**

(54) **X-ray inspector for measuring shape and content of gold**

(57) Provided is an X-ray inspector (1) capable of non-destructively measuring a shape and content of gold (Au) contained in an object to be inspected (W), promptly with high accuracy. An X-ray inspector includes: an X-ray generator (4) that irradiates an object to be inspected (W) with X-rays having energy of 90 keV or higher (L); X-ray detector (6,7) that detects the X-rays transmitted through the object to be inspected (W); a computing section (8) that measures a shape and content of Au contained in the object to be inspected (W) based on an X-ray signal detected by the X-ray detector (6,7), wherein an Au filter (13) and a Pt filter (14) are respectively provided between the X-ray detector and the object to be inspected. The X-ray detector (6,7) detects X-rays emitted from the X-ray generator and transmitted through the object to be inspected and the Au filter (13) and X-rays emitted from the X-ray generator and transmitted through the object to be inspected and the Pt filter (14). The computing section measures the shape and the content of Au contained in the object to be inspected (W) based on X-ray signals corresponding respectively to the X-rays.

[Fig.1]

EP 2 623 965 A1

**Description**

BACKGROUND OF THE INVENTION

1. Field of the Invention

The present invention relates to an X-ray inspector that non-destructively measures a shape and content of gold (Au) contained in an object to be inspected such as gold ore, noble metal jewelry, a printed circuit board, and an electronic component.

2. Description of Related Art

Conventionally, as a method of analyzing content of gold (Au) contained in an object to be inspected such as gold ore, noble metal jewelry, a printed circuit board, and an electronic component, an analysis method in which the object to be inspected is subjected to a chemical reaction as pretreatment and then analyzed using an ICP analyzer or the like has been used in general (see, for example, Japanese Unexamined Patent Publication No. 2009-128315).
Further, there is conventionally known an X-ray fluorescence analyzer that irradiates the object to be inspected with X-rays having comparatively low energy and analyzes a wavelength or an intensity of element-specific fluorescence X-rays generated from the object to be inspected to thereby non-destructively analyze a type or content of elements constituting the object to be inspected (see, for example, Japanese Unexamined Patent Publication No. 2007-003283).
However, in a case where the pretreatment involving a chemical reaction is performed or reagents are used as disclosed in Japanese Unexamined Patent Publication No. 2009-128315, a shape of the object to be inspected is destroyed, thus failing to reproduce the object to be inspected itself. Thus, there is a problem in that credibility of analysis results cannot be always ensured and that the shape of Au contained in the object to be inspected cannot be measured. Further, since sufficient time is required for the chemical reaction or drying, considerable time is required to obtain analysis results. Thus, an error is likely to occur in analysis accuracy due to external influence such as personal error of an analyzer or treatment time. Further, when the content of Au contained in the object to be inspected is analyzed by the fluorescent X-ray analysis as disclosed in Japanese Unexamined Patent Publication No. 2007-003283, since X-rays having an energy value of about Au - L$\alpha$ = 9.712 eV to Au - Ly = 13.38 eV is used, only surface information of a depth of several tens of $\mu$m from a surface of the object to be inspected is obtained. Thus, this fluorescent X-ray analysis can be practically used only for measurement of an object having a thickness of a thin-film plating or the like.

SUMMARY OF THE INVENTION

The present invention has been made in view of the various problems as described above, and an object thereof is to provide an X-ray inspector capable of non-destructively measuring a shape and content of gold (Au) contained in an object to be inspected, promptly and with high accuracy.
To achieve the above object, an X-ray inspector according to a first aspect of the present invention includes: an X-ray generator that irradiates an object to be inspected with X-rays having energy of 90 keV or higher; an X-ray detector that detects the X-rays transmitted through the object to be inspected; a computing section that measures a shape and content of gold (Au) contained in the object to be inspected based on an X-ray signal detected by the X-ray detector, wherein a first filter formed of Au and a second filter formed of Pt or a material whose atomic number is lower than Pt are respectively provided between the X-ray detector and the object to be inspected. The X-ray detector detects X-rays emitted from the X-ray generator and transmitted through the object to be inspected and the first filter, and X-rays emitted from the X-ray generator and transmitted through the object to be inspected and the second filter. The computing section measures the shape and the content of Au contained in the object to be inspected based on X-ray signals corresponding respectively to the X-rays detected by the X-ray detector.
In accordance with a second aspect of the invention, the X-ray inspector further includes a conveyance section that conveys the object to be inspected. The X-ray detector includes a first X-ray line sensor for detecting the X-rays transmitted through the object to be inspected conveyed by the conveyance section and the first filter, and a second X-ray line sensor for detecting the X-rays transmitted through the object to be inspected conveyed by the conveyance section and the second filter. The computing section performs subtraction based on the X-ray signals detected respectively by the first and second X-ray line sensors to generate an Au-extraction X-ray image representing the shape and the content of Au contained in the object to be inspected.
In accordance with a third aspect of the invention, the X-ray inspector further includes a filter switching mechanism for switching between the first filter and the second filter such that one of the first filter and the second filter is located between the X-ray detector and the object to be inspected. The X-ray detector is an X-ray camera that receives the X-rays transmitted through the object to be inspected and the first filter, and the X-rays transmitted through the object to be inspected and the second filter, the first filter and the second filter being switched by the filter switching mechanism, and captures X-ray images corresponding to the respective X-rays. The computing section performs subtraction between the X-ray images acquired by the X-ray camera to generate an Au-extraction X-ray image representing the shape and the content of Au contained in the object to be inspected.

In accordance with a fourth aspect of the invention, the X-ray inspector further includes a display section that displays a measurement result obtained by the computing section.

According to the X-ray inspector of the first aspect, the object to be inspected is irradiated with X-rays having energy of 90 keV or higher, the X-ray detector detects X-rays transmitted through the object to be inspected and the first filter and X-rays transmitted through the object to be inspected and the second filter, and the object to be inspected is measured based on X-ray signals corresponding respectively to the detected X-rays. Accordingly, the shape and the content of gold (Au) that is contained not only on a surface of the object to be inspected but also inside thereof can be non-destructively measured, promptly and with high accuracy.

According to the X-ray inspector of the second aspect, the object to be inspected is automatically conveyed by the conveyance section to the position above the X-ray line sensor. Thus, even when a plurality of objects are required to be inspected, the objects to be inspected are sequentially conveyed so that the shape and the content of Au contained in each of the objects to be inspected can be efficiently measured.

According to the X-ray inspector of the third aspect, the filter switching mechanism switches between the first filter and the second filter such that one of the first filter and the second filter is located between the X-ray camera and the object to be inspected. Accordingly, the X-ray camera receives the X-rays transmitted through the object to be inspected and the first filter and the X-rays transmitted through the object to be inspected and the second filter, whereby X-ray images corresponding to the received X-rays can be efficiently acquired.

According to the X-ray inspector of the fourth aspect, the display section that displays a measurement result is provided, whereby a user can check the measurement result immediately.

## BRIEF DESCRIPTION OF THE DRAWINGS

Fig. 1 is a schematic diagram illustrating an example of an X-ray inspector according to a first embodiment of the present invention;
Fig. 2 is a schematic perspective view illustrating an example of a configuration of the X-ray inspector according to the first embodiment of the present invention;
Fig. 3A and 3B are graphs each representing a relationship between X-ray energy and an absorption coefficient, where Fig. 3A illustrates a relationship between the X-ray energy and the absorption coefficient of Au, and Fig. 3B illustrates a relationship between the X-ray energy and the absorption coefficient of Pt;
Figs. 4A and 4B are views illustrating an object to be inspected and an Au-extraction X-ray image;
Figs. 5A and 5B are schematic explanatory views for describing the Au-extraction X-ray image; and
Fig. 6 is a view illustrating an example of an X-ray inspector according to a second embodiment of the present invention.

## DETAILED DESCRIPTION OF PREFERRED EMBODIMENTS

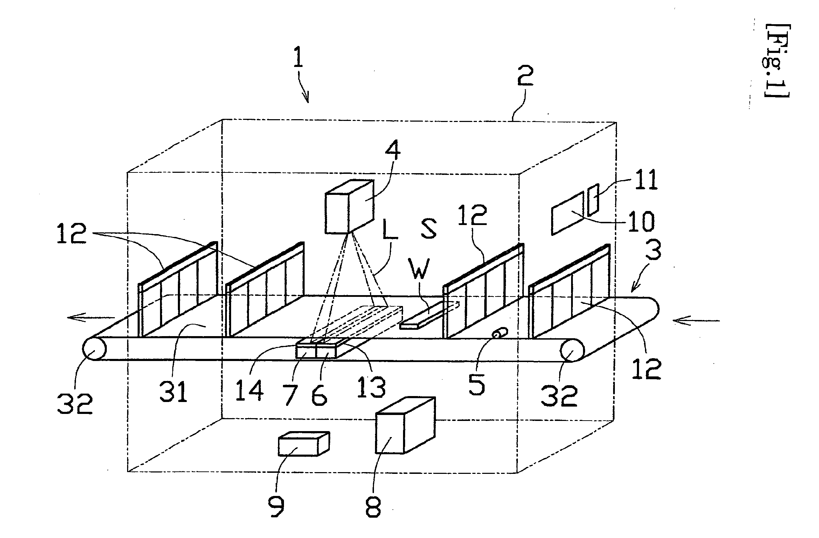

An X-ray inspector 1 according to a first embodiment of the present invention will be described with reference to the drawings. As illustrated in Fig. 1, the X-ray inspector 1 according to the present invention includes a conveyance section 3, an X-ray generator 4, an optical height sensor 5, two X-ray line sensors 6, 7, a computing section 8, and a power supply unit 9. The conveyance section 3 conveys an object W to be inspected to an X-ray-shielding casing 2. The X-ray generator 4 irradiates the object W to be inspected, which is being conveyed, with X-rays. The optical height sensor 5 detects conveyance of the object W to be inspected to an inspection space S in the casing 2. The X-ray line sensors 6, 7 each detect the X-rays transmitted through the object W to be inspected. The computing section 8 measures a shape and content of gold (Au) contained in the object W to be inspected based on X-ray signals detected by the X-ray line sensors 6, 7. The power supply unit 9 supplies electric power to the above components. Further, a display section 10 that displays a measurement result or the like obtained by the computing section 8, and an operation section 11 for setting operational conditions of the X-ray inspector 1 are provided on an outer surface of the casing 2.

More specifically, the casing 2 encloses the X-rays inside the inspection space S and has, on both sides thereof in a conveyance direction indicated by arrows, openings serving respectively as a carry-in port and a carry-out port of the object W to be inspected. These openings each have a shielding curtain 12 for preventing the X-rays in the inspection space S from leaking outside.

The conveyance section 3 conveys the object W to be inspected horizontally from the carry-in port of the casing 2 to the carry-out port thereof, and has both ends protruding from the carry-in port and carry-out port, respectively. For example, the conveyance section 3 is configured by a conveyor belt disposed horizontally with respect to the casing 2. A belt 31 wound around a pair of rollers 32 is driven by a motor (not illustrated) or the like to convey, at a predetermined conveyance speed, the object W to be inspected placed on a surface of the belt 31 from the carry-in port to carry-out port. Examples of the object W to be inspected conveyed by the conveyance section 3 include gold ore, noble metal jewelry, a printed circuit board, an electronic component, and various materials assumed to contain gold (Au).

The X-ray generator 4 irradiates the object W to be inspected conveyed by the conveyance section 3 with X-rays having energy of 90 keV (Au-Kab) or higher. Although not illustrated in detail, the X-ray generator 4 has an X-ray tube provided with a cathode filament and an anode target, and causes thermal electrons from the cathode filament collide with the anode target by high voltage between the cathode and the anode to generate X-rays. The generated X-rays pass through an X-ray slit (not illustrated) to be shaped into fan-beam-like X-rays L having a fan shape extending in a direction orthogonal to the conveyance direction of the conveyance section 3 and is directed downward.

The optical height sensor 5 detects the conveyance of the object W to be inspected into the inspection space S, and is provided on the carry-in port side of the casing 2. In the X-ray inspector 1, the optical height sensor 5 detects a timing at which the object W to be inspected is conveyed to the inspection space S partitioned by the shielding curtain 12 provided in the casing 2. According to the detected timing, the X-ray generator 4 can appropriately irradiate the object W to be inspected with X-rays. Although the optical height sensor 5 is provided only on the carry-in port side in the present embodiment, the optical height sensor 5 may also be provided on the carry-out port side of the casing 2 so as to detect whether the object W to be inspected has been appropriately carried out of the casing 2.

The X-ray line sensors 6, 7 are each designed to detect X-rays transmitted through the object W to be inspected and is provided between upper and lower parts of the belt 31 of the conveyance section 3 so as to face the X-ray generator 4. As the X-ray line sensors 6, 7, for example, conventionally known sensors such as a scintillator sensor or a semiconductor sensor may be used. The scintillator sensor converts the X-rays into fluorescent light using a scintillator which is a fluorescent substance, and further converts the fluorescent light into a current signal using detection elements including photodiodes or charge-coupled devices arranged in an array extending in the direction orthogonal to the conveyance direction. The semiconductor sensor directly detects the X-rays using a plurality of semiconductor detection elements arranged in an array.

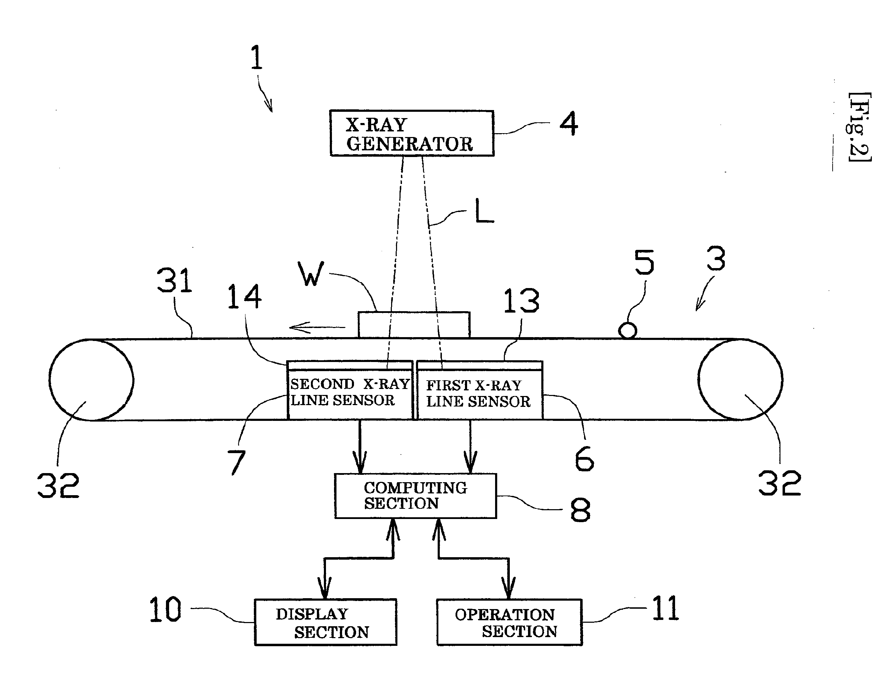

As illustrated in Figs. 1 and 2, the X-ray line sensor 6 has an Au filter 13 formed of Au and acting as a sheet-like absorber. The Au filter 13 is provided so as to cover a part or a whole of an upper surface, on which the X-rays transmitted through the object W to be inspected is incident, of the X-ray line sensor 6. On the other hand, the X-ray line sensor 7 has, on its upper surface, a Pt filter 14 formed of Pt (platinum) whose atomic number is lower than that of Au and acting as a sheet-like absorber. A filter formed of a material whose atomic number is lower than Pt may be used in place of the Pt filter 14.

The computing section 8 is designed to perform control of the components of the X-ray inspector 1 and perform computation of the shape and the content of gold (Au) contained in the object W to be inspected based on the X-ray signals detected by the X-ray line sensors 6, 7. The computing section 8 is configured by a computer, for example.

The display section 10 is configured by a liquid crystal display, for example, and displays various types of information concerning the X-ray inspector 1 and a measurement result obtained from the computing section 8. The operation section 11 sets various settings for operational conditions and the like of the X-ray inspector 1, such as a conveyance speed of the conveyance section 3 and an irradiation intensity of the X-ray generator 4. Information input from the operation section 11 is sent to the computing section 8, and the computing section 8 performs control based on the input information from the operation section 11. Although the display section 10 and the operation section 11 are independently provided in the present embodiment, the display section 10 and the operation section 11 may be integrally provided by using a touch panel display. Further, although the display section 10 and operation section 11 are provided on the outer surface of the casing 2 on the carry-in port side, the present invention is not limited thereto. The display section 10 and operation section 11 may be provided on a front surface side of the casing 2 or separately from the casing 2.

The following describes operations in performing measurement of the shape and the content of Au contained in the object W to be inspected using the X-ray inspector 1 with reference to Figs. 1 and 2.

The optical height sensor 5 detects that the object W to be inspected has been carried in through the carry-in port of the casing 2, and outputs a detection signal to the computing section 8. The computing section 8 calculates a timing at which the object W to be inspected passes through the inspection space S based on the detection signal and the conveyance speed of the conveyance section 3.

According to the computed timing, the X-ray generator 4 appropriately irradiates the object W to be inspected which is conveyed by the conveyance section 3 into the inspection space S with the fan-beam-like X-rays L having a fan shape obtained through the X-ray slit (not illustrated) and having energy of 90 keV or higher.

Upon irradiation of the fan-beam-like X-rays L from the X-ray generator 4, the X-ray line sensor 6 detects a transmission amount of the X-rays transmitted through the object W to be inspected and the Au filter 13. Further, the X-ray line sensor 7 detects a transmission amount of the X-rays transmitted through the object W to be inspected and the Pt filter 14. The X-ray transmission amounts detected by the X-ray line sensors 6, 7 are output as the X-ray signals, respectively, converted into digital signals through an A/D conversion section (not illustrated), and then input to the computing section 8.

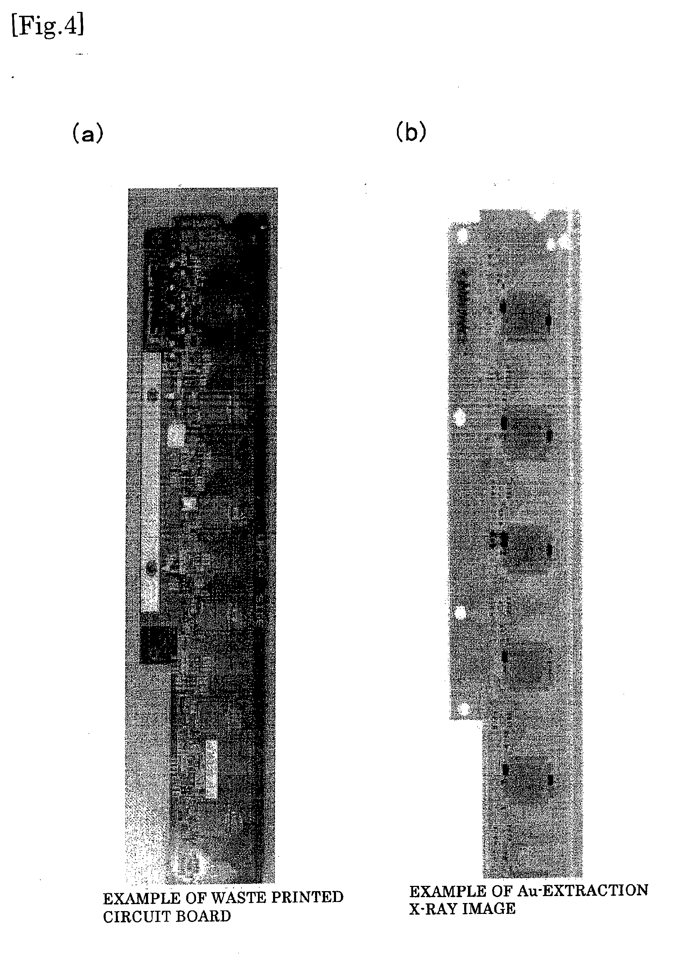

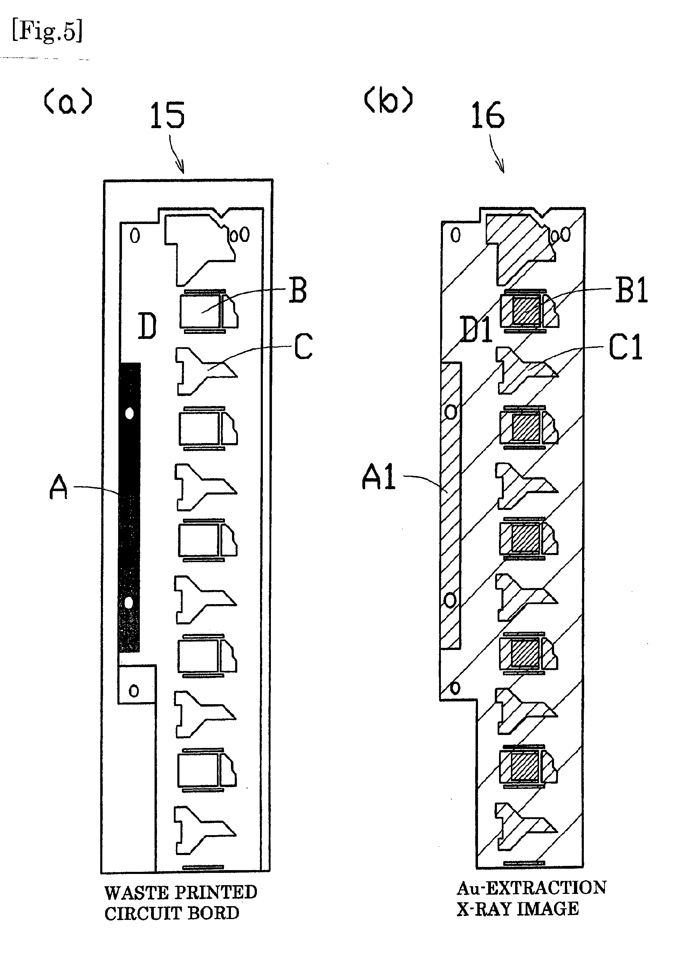

The computing section 8 performs subtraction to the X-ray signals input thereto to thereby extract only an Au component of the object W to be inspected, and generates an Au-extraction X-ray image as illustrated in Fig. 4B, in which a gray scale changing depending on the content of Au is represented in units of pixels. Fig. 4B illustrates an example of the Au-extraction X-ray image actually generated using the X-ray inspector 1 with a waste printed circuit board of Fig. 4A as an object to be inspected. Actually, a color Au-extraction X-ray image (gray-scale image) is displayed on the display section 10. Fig. 5B schematically illustrates such an Au-extraction X-ray image 16, in which a gray-scale is represented by a density of hatching lines. That is, a portion represented by dense hatching lines indicates a dark color, representing that an Au layer is thick or many Au layers are included. On the other hand, a portion represented by sparse hatching lines indicates a faint color, representing that an Au layer is thin or almost no Au layer is included. As described above, the Au-extraction X-ray image 16 can show not only a black area A in which a gold plating inside a waste printed circuit board 15 of Fig. 5A appears on a surface thereof, but also areas B to D in which the gold plating does not appear on the surface, as a gray-scale image corresponding to the content of Au. Thus, as illustrated in Fig. 5B, it is possible to easily grasp that an area B1 corresponding to the area B of Fig. 5A in which presence of Au cannot be grasped at all actually contains more Au than an area A1 corresponding to the area A of Fig. 5A in which the gold plating appears on the surface. Further, it can easily be understood from Fig. 5B that an area D1 hardly contains Au.

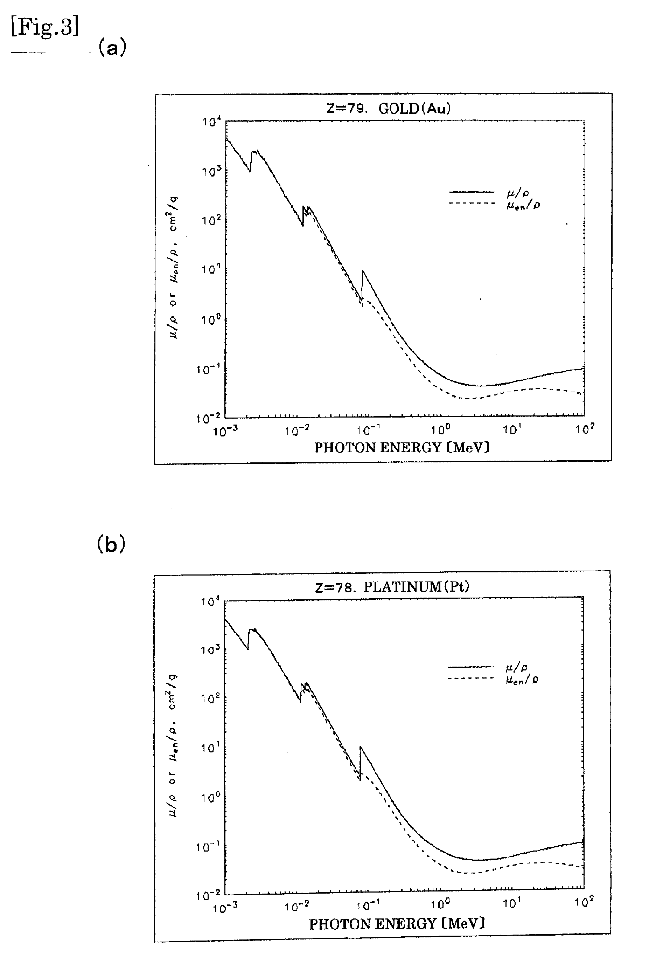

Specifically, only the Au component of the object W to be inspected is extracted based on the following relational expressions. First, absorption of X-rays by the object W to be inspected is represented as Equation (1), where Io is an intensity of incident X-rays, $\mu$ is a mass-absorption coefficient, $\rho$ is a density of the object W to be inspected, and t is a thickness of the object W to be inspected. The mass-absorption coefficient $\mu$ is represented by $\mu = f_\mu$ (E). In the case of Au, as illustrated in Fig. 3A, a discrete and unique value is exhibited at an Au absorption end. That is, a difference in absorption value between a higher side and a lower side relative to an absorption end energy value depends only on Au element.

[Mathematical Formula 1]

$$I = I_0 \mathrm{EXP}(-\mu\rho t) \qquad \cdots (1)$$

The mass-absorption coefficient $\mu$, the density $\rho$ of the object W to be inspected, the thickness t of the object W to be inspected, and a mass concentration $C_{Au}$ of Au are represented as the following Equations (2) to (6). A subscript "i" in the equations represents component elements, other than Au, contained in the object to be inspected. Further, a subscript H on the upper-left of $\mu$ represents a higher value in terms of the absorption end energy and a subscript L on the upper-left of $\mu$ denotes a lower value in terms of the absorption end energy.

[Mathematical Formula 2]

$$\mu = C_{Au} {}^{H}\mu_{Au} + \sum C_i {}^{H}\mu_i \qquad \cdots (2)$$

[Mathematical Formula 3]

$$\mu = C_{Au} {}^{L}\mu_{Au} + \sum C_i {}^{L}\mu_i \qquad \cdots (3)$$

[Mathematical Formula 4]

$$\rho = C_{Au}\,\rho_{Au} + \sum C_i \rho_i \qquad \cdots(4)$$

[Mathematical Formula 5]

$$t_{Au} = t - \sum t_i \qquad \cdots(5)$$

[Mathematical Formula 6]

$$C_{Au} = 1 - \sum C_i \qquad \cdots(6)$$

Equation (1) can be represented logarithmically as Equation (7). When Equations (2) to (4) are assigned to an equation of the thickness t of the object W to be inspected obtained by modifying Equation (7), a thickness $t_{Au}$ of Au can be represented as Equation (8). The mass concentration $C_{Au}$ of Au can be obtained from Equation (6) and Equation (8). Accordingly, only the Au component of the object W to be inspected is extracted, to thereby generate the Au-extraction X-ray image.

[Mathematical Formula 7]

$$Ln(I/I_0) = -\mu\rho t \qquad \cdots(7)$$

[Mathematical Formula 8]

$$t = \frac{-Ln\left({}^{H}I \big/ {}^{H}I_0\right)}{\mu\rho}$$

$$t_{Au} = \frac{-Ln\left({}^{L}I \big/ {}^{L}I_0\right)}{\left(C_{Au}\,{}^{L}\mu_{Au} + C_i \sum {}^{L}\mu_i\right)\left(C_{Au}\rho_{Au} + C_i \sum \rho_i\right)}$$

$$= \frac{-Ln\left({}^{H}I \big/ {}^{H}I_0\right)}{\left(C_{Au}\,{}^{H}\mu_{Au} + C_i \sum {}^{H}\mu_i\right)\left(C_{Au}\rho_{Au} + C_i \sum \rho_i\right)} \qquad \cdots(8)$$

The computing section 8 obtains the shape of Au from the generated Au-extraction X-ray image and integrates an area of a pixel corresponding to the shape of Au and a thickness of Au of each pixel, to thereby calculate a volume of Au. Thus, by multiplying the volume of Au by a density of Au, the content of Au contained in the object W to be inspected can be obtained.

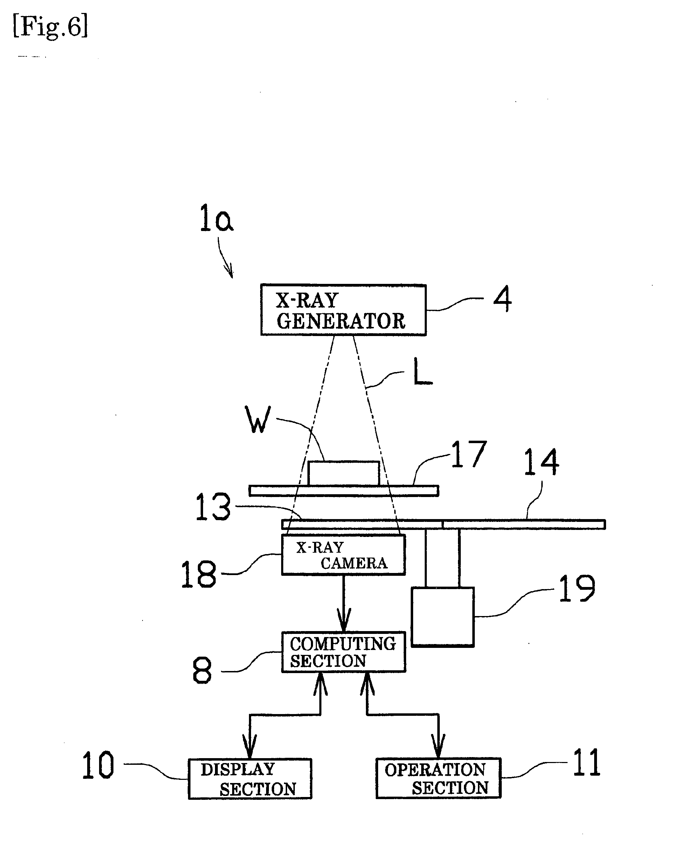

Next, an X-ray inspector la according to a second embodiment of the present invention will be described with reference to Fig. 6. As illustrated in Fig. 6, the X-ray inspector la includes a setting section 17, an X-ray camera 18, and a filter switching mechanism 19. The setting section 17 is for setting the object W to be inspected thereon, and is provided in place of the conveyance section 3 that conveys the object W to be inspected. The X-ray camera 18 receives X-rays and captures an X-ray image, and is provided in place of the X-ray line sensors 6, 7. The filter switching mechanism 19 switches between the Au filter 13 and Pt filter 14 such that one of the filters 13 and 14 is located between the X-ray camera 18 and the object W to be inspected. The same reference numerals are assigned to the same elements as in the X-ray inspector 1 of the first embodiment, and detailed descriptions thereof are omitted.

More specifically, the setting section 17 is provided in a casing (not illustrated) so as to face the X-ray generator 4 such that the object W to be inspected is irradiated with X-rays when the object W to be inspected is set on the setting section 17. The X-ray camera 18 detects X-rays transmitted through the object W to be inspected set on the setting section 17, and captures an X-ray image represented by pixels having density values corresponding to an intensity of the detected X-rays. The X-ray camera 18 is disposed below the setting section 17 so as to face the X-ray generator 4.

The filter switching mechanism 19 switches between the Au filter 13 and Pt filter 14 such that one of the filters 13 and 14 is located between the X-ray camera 18 and the object W to be inspected. For example, switching can be made by using a motor or the like to horizontally rotate the filters 13 and 14 disposed parallel to an upper surface of the X-ray camera 18 by predetermined angles. The filter switching mechanism 19 is not limited to such a configuration, and may have any configuration as long as it can switch positions of the Au filter 13 and the Pt filter 14.

The following describes operations in performing measurement of the shape and the content of Au contained in the object W to be inspected using the X-ray inspector 1a with reference to Fig. 6.

The object W to be inspected is set on the setting section 17, and the filter switching mechanism 19 is used to position the Au filter 13 between the object W to be inspected and the X-ray camera 18. In this state, as illustrated in Fig 6, the X-ray generator 4 irradiates the object W to be inspected with the X-rays L having energy of 90 keV or higher.

Then, the X-ray camera 18 detects X-rays transmitted through the object W to be inspected and the Au filter 13, captures an X-ray image represented by pixels having density values corresponding to an intensity of the detected X-rays, and outputs the captured image to a storage unit of the computing section 8.

Upon output of the X-ray image captured by the X-ray camera 18 to the storage unit of the computing section 8, the computing section 8 uses the filter switching mechanism 19 to switch the Au filter 13, which is currently located between the X-ray camera 18 and the object W to be inspected, to the Pt filter 14. Then, the X-ray camera 18 detects X-rays transmitted through the object W to be inspected and the Pt filter 14, captures an X-ray image represented by pixels having density values corresponding to an intensity of the detected X-rays, and outputs the captured image to the computing section 8. An order of switching between the Au filter 13 and the Pt filter 14 is not particularly limited, and the Pt filter 14 may be positioned between the X-ray camera 18 and the object W to be inspected to capture the X-ray image, and then the Pt filter 14 may be switched to the Au filter 13.

The computing section 8 may perform subtraction between the X-ray images acquired from the X-ray camera 18, to thereby extract only the Au component contained in the object W to be inspected similarly to the X-ray inspector 1, and generate the Au-extraction X-ray image. Thereafter, the same processing as in the X-ray inspector 1 is performed to thereby obtain the content of Au contained in the object W to be inspected.

The present invention is not limited to the above embodiments, and may be appropriately modified without departing from the scope of spirit of the invention.

INDUSTRIAL APPLICABILITY

The X-ray inspector according to the present invention can effectively be used as an apparatus for measuring the shape and the content of gold (Au) contained in gold ore, noble metal jewelry, a printed circuit board, and an electronic component.

**Claims**

1. An X-ray inspector comprising:

an X-ray generator that irradiates an object to be inspected with X-rays having energy of 90 keV or higher;
an X-ray detector that detects the X-rays transmitted through the object to be inspected;
a computing section that measures a shape and content of gold (Au) contained in the object to be inspected based on an X-ray signal detected by the X-ray detector, wherein
a first filter formed of Au and a second filter formed of Pt or a material whose atomic number is lower than Pt are respectively provided between the X-ray detector and the object to be inspected,
the X-ray detector detects X-rays emitted from the X-ray generator and transmitted through the object to be inspected and the first filter, and X-rays emitted from the X-ray generator and transmitted through the object to be inspected and the second filter, and
the computing section measures the shape and the content of Au contained in the object to be inspected based on X-ray signals corresponding respectively to the X-rays detected by the X-ray detector.

2.    The X-ray inspector according to claim 1, further comprising:

a conveyance section that conveys the object to be inspected, wherein
the X-ray detector includes a first X-ray line sensor for detecting the X-rays transmitted through the object to be inspected conveyed by the conveyance section and the first filter, and a second X-ray line sensor for detecting the X-rays transmitted through the object to be inspected conveyed by the conveyance section and the second filter, and
the computing section performs subtraction based on the X-ray signals detected respectively by the first and second X-ray line sensors to generate an Au-extraction X-ray image representing the shape and the content of Au contained in the object to be inspected.

3.    The X-ray inspector according to claim 1, further comprising:

a filter switching mechanism for switching between the first filter and the second filter such that one of the first filter and the second filter is located between the X-ray detector and the object to be inspected, wherein
the X-ray detector is an X-ray camera that receives the X-rays transmitted through the object to be inspected and the first filter and the X-rays transmitted through the object to be inspected and the second filter, the first filter and the second filter being switched by the filter switching mechanism, and captures X-ray images corresponding to the respective X-rays, and
the computing section performs subtraction between the X-ray images acquired by the X-ray camera to generate an Au-extraction X-ray image representing the shape and the content of Au contained in the object to be inspected.

4.    The X-ray inspector according to any of claims 1 to 3, further comprising a display section that displays a measurement result obtained by the computing section.

[Fig.1]

[Fig.2]

[Fig.3]

(a)

Z=79. GOLD(Au)

(b)

Z=78. PLATINUM(Pt)

[Fig.4]

(a)

(b)

EXAMPLE OF WASTE PRINTED
CIRCUIT BOARD

EXAMPLE OF Au-EXTRACTION
X-RAY IMAGE

[Fig.5]

(a)  15

(b)  16

WASTE PRINTED
CIRCUIT BORD

Au-EXTRACTION
X-RAY IMAGE

[Fig.6]

Europäisches
Patentamt
European
Patent Office
Office européen
des brevets

# EUROPEAN SEARCH REPORT

Application Number

EP 12 00 8477

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2007/064868 A1 (FRAUNHOFER GES FORSCHUNG [DE]; KOSTKA GUENTHER [DE]; SCHMITT PETER [DE]) 22 March 2007 (2007-03-22) * the whole document * ----- | 1-4 | INV. G01N23/083 |
| Y | US 4 910 757 A (KIYASU SENYA [JP] ET AL) 20 March 1990 (1990-03-20) * figures 15-20,26 * * column 11, line 23 - column 15, line 25 * ----- | 1-4 | |
| Y | US 6 597 758 B1 (ROSNER S JEFFREY [US]) 22 July 2003 (2003-07-22) * column 5, line 4 - line 37; figure 2 * ----- | 1-4 | |
| A | US 3 974 386 A (MISTRETTA CHARLES A ET AL) 10 August 1976 (1976-08-10) * column 5, line 1 - column 6, line 37; figure 7 * ----- | 1-4 | |
| A | US 3 848 130 A (MACOVSKI A) 12 November 1974 (1974-11-12) * the whole document * ----- -/-- | 1-4 | TECHNICAL FIELDS SEARCHED (IPC) G01N G01T |

The present search report has been drawn up for all claims

| Place of search | Date of completion of the search | Examiner |
|---|---|---|
| Munich | 17 May 2013 | Dedman, Emma |

EPO FORM 1503 03.82 (P04C01)

Europäisches
Patentamt

European
Patent Office

Office européen
des brevets

**EUROPEAN SEARCH REPORT**

Application Number

EP 12 00 8477

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | G. P. Ferreira ET AL: "Elemental Analysis of Gold Coins by Particle Induced X-ray Emission (PIXE)", Archaeometry, 1 January 1981 (1981-01-01), pages 189-197, XP055062872, Retrieved from the Internet: URL:http://onlinelibrary.wiley.com/store/10.1111/j.1475-4754.1981.tb00305.x/asset/j.1475-4754.1981.tb00305.x.pdf?v=1&t=hgp3hadp&s=30a8c0c975bd91437c974ae9ce29c0ace2dc59bd [retrieved on 2013-05-14] * the whole document * | 1 | |
| | ----- | | |
| A | W. S. Williams ET AL: "ANALYSIS OF GOLD HOARD FROM LATE ROMAN/ EARLY BYZANTINE PERIOD FOUND IN JORDAN", MRS Proceedings, 1 January 1996 (1996-01-01), pages 155-165, XP055062878, Retrieved from the Internet: URL:http://journals.cambridge.org/download.php?file=/OPL/OPL462/S1946427400406366a.pdf&code=05163cb5d929b23815bc15f69c7fae16 [retrieved on 2013-05-14] * abstract * * page 158, last paragraph * * page 164, paragraph 1 * | 1 | TECHNICAL FIELDS SEARCHED (IPC) |
| | ----- | | |
| | -/-- | | |

The present search report has been drawn up for all claims

| Place of search | Date of completion of the search | Examiner |
|---|---|---|
| Munich | 17 May 2013 | Dedman, Emma |

EPO FORM 1503 03.82 (P04C01)

**EUROPEAN SEARCH REPORT**

Application Number

EP 12 00 8477

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Joe Zhou ET AL: "Establishing the Process Mineralogy of Gold Ores", SGS Minerals, 1 January 2004 (2004-01-01), pages 1-16, XP055062883, Retrieved from the Internet: URL:http://www.sgs.co.uk/~/media/Global/Documents/Technical Documents/SGS-MIN-Tech Pub-2004-03 Process Mineralogy-LR-EN-11-09.pdf [retrieved on 2013-05-14] * the whole document * ----- | 1 | |
| A | US 5 754 621 A (SUZUKI YOKO [JP] ET AL) 19 May 1998 (1998-05-19) * column 8, line 40 - column 9, line 9; figure 5 * ----- | 1 | |

TECHNICAL FIELDS SEARCHED (IPC)

The present search report has been drawn up for all claims

| Place of search | Date of completion of the search | Examiner |
|---|---|---|
| Munich | 17 May 2013 | Dedman, Emma |

**ANNEX TO THE EUROPEAN SEARCH REPORT
ON EUROPEAN PATENT APPLICATION NO.**

EP 12 00 8477

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2013

| Patent document cited in search report | | Publication date | Patent family member(s) | | Publication date |
|---|---|---|---|---|---|
| US 2007064868 | A1 | 22-03-2007 | AT | 371860 T | 15-09-2007 |
| | | | DE | 102004017149 A1 | 20-10-2005 |
| | | | EP | 1711800 A1 | 18-10-2006 |
| | | | US | 2007064868 A1 | 22-03-2007 |
| | | | WO | 2005095933 A1 | 13-10-2005 |
| US 4910757 | A | 20-03-1990 | NONE | | |
| US 6597758 | B1 | 22-07-2003 | EP | 1361427 A2 | 12-11-2003 |
| | | | US | 6597758 B1 | 22-07-2003 |
| US 3974386 | A | 10-08-1976 | CA | 1045254 A1 | 26-12-1978 |
| | | | DE | 2530315 A1 | 29-01-1976 |
| | | | GB | 1492412 A | 16-11-1977 |
| | | | JP | S5119488 A | 16-02-1976 |
| | | | JP | S5442596 B2 | 14-12-1979 |
| | | | US | 3974386 A | 10-08-1976 |
| US 3848130 | A | 12-11-1974 | NONE | | |
| US 5754621 | A | 19-05-1998 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009128315 A

- JP 2007003283 A